# EUROPEAN PATENT SPECIFICATION

(11) **EP 4 279 855 B1**
(45) Date of publication and mention of the grant of the patent: **25.03.2026**
(21) Application number: 22174014.5
(22) Date of filing: 18.05.2022
(51) Int. Cl.: F28D 7/16, F28F 21/02, C04B 35/52

(54) **METHOD FOR MANUFACTURING A HEAT EXCHANGE GRAPHITE ASSEMBLY, CORRESPONDING ASSEMBLY AND TUBE BUNDLE HEAT EXCHANGER COMPRISING THE SAME**
VERFAHREN ZUR HERSTELLUNG EINER WÄRMETAUSCHERGRAPHITANORDNUNG, ENTSPRECHENDE ANORDNUNG UND ROHRBÜNDELWÄRMETAUSCHER DAMIT
PROCÉDÉ DE FABRICATION D'UN ENSEMBLE GRAPHITE D'ÉCHANGE DE CHALEUR, ENSEMBLE CORRESPONDANT ET ÉCHANGEUR DE CHALEUR À FAISCEAU TUBULAIRE LE COMPRENANT

(43) Date of publication of application: 22.11.2023
(73) Proprietor: Mersen France Py SAS, 54530 Pagny-sur-Moselle (FR)
(72) Inventor: THUMMEN, Frédéric, 54530 PAGNY SUR MOSELLE (FR); BENOIT, Jérémie, 54700 PONT A MOUSSON (FR); DORNIER, Jérôme, 54220 MALZEVILLE (FR)
(74) Representative: IXAS Conseil

(56) References cited:
- EP-A1- 0 744 587
- CN-A- 107 560 463
- CN-A- 113 028 864
- CN-U- 202 648 479
- US-A- 4 474 233

## Description

### Technical field of the invention

The invention relates to the technical field of tube bundle heat exchangers. It deals more particularly with an improved manufacturing method of a heat exchange graphite assembly, which is part of such a tube bundle exchanger. The invention also relates to a heat exchange graphite assembly obtained according this method, as well as to an exchanger which is equipped with such a graphite assembly.

### Prior art

Numerous types of heat exchangers are known, of which mention shall be made inter alia of plate, block or fin exchangers. The invention relates more particularly to a tube bundle-type heat exchanger, which typically comprises an external shell accommodating a so-called heat exchange assembly. According to the present invention, the latter is advantageously made of graphite, since this material makes it possible to resist to highly corrosive fluids and high temperatures.

Said graphite assembly first comprises a plurality of tubes forming a bundle, as well as two so-called tube sheets or tube plates provided at the opposite ends of said tubes. Moreover one or several baffles are provided in one or several intermediate locations, with reference to the longitudinal direction of the tubes. The shell of the exchanger defines an inlet chamber and an outlet chamber for a first fluid, also called process fluid, which generally extend both along main axis of the exchanger. Moreover this shell is also equipped with inlet pipe and outlet pipe for a second fluid, also called service fluid, which generally extend both in a transverse manner.

In use first fluid, which is typically a liquid or a gas, flows from inlet chamber through the inner volume of the tubes and thereafter in the outlet chamber. In parallel second fluid, which is typically water or steam water, flows from inlet pipe in the volume delimited between the inner surface of the shell and the outer surfaces of the pipes. Under these conditions, a heat exchange between said fluids take place through the tube walls. So as to ensure an appropriate implementation, the tube sheets need to be perfectly sealed with respect to the inner wall of the shell.

An example of a tube bundle heat exchanger of the above type is the exchanger marketed by the applicant under reference POLYTUBEO. The manufacturing method of the heat exchange graphite assembly, part of this exchanger, is the following.

First the tubes, the tube sheets and the baffles are submitted to an impregnation step, typically in a vessel containing an appropriate resin. Then these impregnated parts undergo further machining steps. In particular, the opposite ends of the tubes are tapered so as to be fixed in holes provided in each tube sheet.

This tapered shape makes it possible to create a free space, between the wall of each hole and the facing external wall of the tube. This space is then filled with a cement, which leads to the mutual attachment between the tube and the tube sheet. In a typical way, this cement is a mixture of phenolic resin and graphite powder.

The POLYTUBE^{®} exchanger has exhibited very satisfactory performances, over decades. Indeed it defines a large heat transfer area and it shows a superior thermal conductivity, as well as a high mechanical strength.

Other solutions have been proposed, as variants of this graphite assembly.

First US 4,474,233 discloses a tube bundle, wherein each tube is surrounded by graphite fibers. This makes it possible to improve the dynamics strength of these graphite tubes.

Moreover CN 101539379 describes an exchanger, wherein each tube is a modified phenolic resin graphite extruded tube that has been treated at a medium temperature of 300° C. Due to this treatment, its thermal stability and chemical stability are improved, and its linear expansion coefficient is greatly reduced.

Furthermore CN 107560463 A discloses a manufacturing method of a heat exchange graphite assembly comprising: a plurality of tubes forming a bundle; two tube sheets provided at opposite ends of said tubes, each tube sheet comprising through holes for the reception of said tubes; at least one baffle provided at intermediate location of said tubes, each baffle comprising openings for the passage of said tubes.

Finally CN 211120768 proposes a heat exchanger, wherein the tube plates define a row of chambers, arranged side-by-side. The fluid thus circulates along a back and forth motion, between these tube plates.

However there is a need to improve the manufacturing process of the heat exchange graphite assembly, which has been above described, as well as to improve the tube bundle exchanger equipped with this assembly.

That being said, one aim of the present invention is providing a manufacturing method which makes it possible to substantially avoid any problem, due to potential corrosion and leak of said assembly.

A further aim of the present invention is providing such a manufacturing method, the global duration of which and the labor time of which are significantly reduced.

A further aim of the present invention is providing such a manufacturing method, which is improved for what concerns environmental issues.

A further aim of the present invention is providing such a manufacturing method, which makes it possible to still increase both heat transfer area and thermal conductivity of the final exchanger.

A further aim of the present invention is providing such a manufacturing method, which improves the transportation of spare parts, not only in terms of costs but also in terms of mechanical damage risks.

A further aim of the invention is providing such a method, which makes it possible to manufacture a heat exchange graphite assembly that can be easily integrated in a shell of prior art exchangers.

Still a further aim of the invention is providing such a method, which leads to the manufacturing of an exchanger having substantially the same mechanical strength and pressure design with respect to prior art.

### Objects of the invention

At least one of the above aims is achieved by a first object of invention, which is a manufacturing method of a heat exchange graphite assembly (1), said assembly being intended to be part of a tube bundle heat exchanger (I), said assembly comprising
- a plurality of tubes (2) forming a bundle (20)
- two tube sheets (4, 5) provided at opposite ends of said tubes, each tube sheet comprising through holes (20) for the reception of said tubes
- at least one baffle (6, 7) provided at intermediate location of said tubes, each baffle comprising openings (60) for the passage of said tubes
   said manufacturing method comprising
- providing said tubes, said tube sheets as well as said baffle(s) in a graphite material being in a so-called non-impregnated or porous state, namely with a first value of porosity
- positioning said tubes, said tube sheets as well as said baffle(s) in their porous state, substantially in the precise position they are intended to occupy, so as to create a functional clearance (230) between the facing walls of said tubes and said holes
- impregnating said tubes, said tube sheets as well as said baffle(s) with an impregnation product different from a cement,
   so as to fill in the pores of said tubes, said tube sheets as well as said baffle (s), in order to confer to graphite material a second value of porosity, well inferior to said first value of porosity; and
   so as to form, in said clearance, a bonding film (30) made of said impregnating product, in order to firmly attach the tubes with respect to the tube sheets.

According to advantageous features of this manufacturing method:
- transverse dimension or thickness (t230) of said clearance (230) is between 0.005 mm and 0.5 mm, in particular between 0.01 mm and 0.1 mm.
- no cement is inserted in said clearance.
- impregnating said tubes, said tube sheets as well as said baffle(s) comprises
   placing in a vessel said tubes, said tube sheets as well as said baffle(s),
   filling said vessel with said impregnation product, in particular from the bottom of said vessel,
   contacting said tubes, said tube sheets as well as said baffle(s) with said impregnation product and emptying said impregnation product.
- contacting duration, between said tubes, said tube sheets as well as said baffle(s) and said impregnation product, is between 5 hours and 72 hours.
- said method further comprises, after the impregnating step, a curing step wherein tubes, tube sheets as well as baffle(s) are heated at a temperature between 50 and 250°C, during a duration between 5 hours and 24 hours.
- the thickness (t30) of bonding film (30) is between 0.005 mm and 0.5 mm, in particular between 0.01 mm and 0.1 mm.
- the thickness (t22) of tube wall (22) is between 1 and 7 mm, advantageously between 2 mm and 5 mm.
- the spacing (S2) between the outer faces of two adjacent tubes is between 0.5 mm and 6 mm, advantageously between 1 mm and 3 mm.

A second object of invention is a heat exchange graphite assembly (1) manufactured by a method as above defined, said assembly being intended to be part of a tube bundle heat exchanger (I), said assembly comprising
- a plurality of tubes (2) forming a bundle (20)
- two tube sheets (4, 5) provided at opposite ends of said tubes, each tube sheet comprising through holes (20) for the reception of opposite ends (3, 3') of said tubes
- at least one baffle (6, 7) provided at intermediate location of said tubes, each baffle comprising openings (60) for the passage of said tubes
- said tubes, said tube sheets as well as said baffle(s) being made of a graphite material,
said graphite material being at least partly filled with an impregnation product, different from a cement
said graphite assembly (1) being characterized in that, at each opposite end (3, 3') of each tube, a continuous bonding film (30) made of said impregnation product is interposed between the facing walls of said tube (2) and said hole (20), so as to attach a respective end of each tube to a respective tube sheet.

According to advantageous features of this heat exchange graphite assembly:
- the thickness (t30) of bonding film (30) is between 0.005 mm and 0.5 mm, in particular between 0.01 mm and 0.1 mm.
- the thickness (t22) of tube wall (22) is between 1 and 7 mm, advantageously between 2 mm and 5 mm.
- the spacing (S2) between the outer faces of two adjacent tubes is between 0.5 mm and 6 mm, advantageously between 1 mm and 3 mm.
- said tube has two straight ends (3, 3').

A third object of invention is a tube bundle heat exchanger comprising
- a heat exchange graphite assembly (1), as defined above,
- a shell (100) surrounding said assembly, the tube sheets (4, 5) of said assembly being attached to the inner wall of said shell, said shell comprising
- first inlet means (110, 112, 114) for the inlet of a first fluid into the tubes (2) of the assembly (1)
- first outlet means (120, 122, 124) for the outlet of said first fluid out of the tubes (2) of the assembly (1)
- second inlet means (150) for the inlet of a second fluid into a heat exchange volume (140) formed between the facing walls of said tubes and said shell
- second outlet means (150) for the outlet of said second fluid out of said heat exchange volume (140).

### Description of the figures

The invention will be described hereinafter, with reference to the appended drawings, given by way of nonlimiting example, wherein:
Figure 1 is a front view, illustrating a tube bundle heat exchanger, which is equipped with a heat exchange graphite assembly according to the invention;
Figure 2 is a perspective view, illustrating more specifically the heat exchange graphite assembly according to the invention;
Figure 3 is an end view, illustrating in more detail and at a greater scale one tube which is part of the bundle belonging to the assembly of figure 2;
Figure 4 is a front view, illustrating more specifically a tube sheet which is part of the assembly of figure 2;
Figure 5 is a front view, showing at greater scale the detail V of figure 4;
Figure 6 is a front view, illustrating more specifically a baffle which is part of the assembly of figure 2;
Figure 7 is a front view, showing at greater scale the detail VII of figure 6;
Figure 8 is a schematic view, illustrating a step of creation of a preform of the assembly of figure 2;
Figure 9 is a front view, illustrating at great scale the preliminary positioning of the tubes with respect to the tube sheet;
Figure 10 is a front view, analogous to figure 9, illustrating the preliminary positioning of the tubes with respect to the baffles;
Figure 11 is a front view, analogous to figure 4, illustrating the attachment of the tubes with respect to the tube sheet;
Figure 12 is a front view, showing at greater scale the detail XII of figure 11;
Figure 13 is a longitudinal cross-section, illustrating under another angle the attachment of the tubes with respect to the tube sheet;
Figure 14 is a longitudinal cross-section, illustrating at a great scale the insertion of a tube into a hole of the tube sheet, according to prior art;
Figure 15 is a longitudinal cross-section, analogous to figure 13, illustrating the attachment of the tubes with respect to the tube sheet according to prior art;
Figure 16 is a front view, analogous to figure 11, illustrating under another angle the attachment of the tubes with respect to the tube sheet according to prior art;
Figure 17 is a front view, showing at greater scale the detail XVII of figure 16.
Figure 18 is a longitudinal cross-section, illustrating at still a greater scale the detail XVIII of figure 14, in particular a line of pores extending at the interface between cement and graphite material.

### Detailed description of the invention

The following reference numbers will be used throughout the present description
I heat exchanger according to the invention
1 assembly of the invention - 2 tube - 20 bundle
D2 diameter of 2 - S2 spacing tubes 2
22 annular wall of tube - t22 thickness
23, 24 inner and outer faces of the tube
3, 3' opposite ends of the tube - 4, 5 tube sheet
40 through holes in tube sheet - 6, 7 baffle
60 openings in baffles - D60 diameter of 60
100 shell - A100 longitudinal axis of shell
110 cover of exchanger I - 112 inlet duct of 110
114 admission chamber - 120 bottom of exchanger I
122 outlet duct of 120 - 124 discharge chamber
130 main cylindrical region of exchanger I
140 heat exchange volume
150, 160 inlet and outlet pipes of I - 201 preform
230 clearance tube and tube sheets - t230 thickness
235 intercalary space between tube and baffle
30 film bonding tube and tube sheets - t30 thickness
II exchanger according to prior art
502 and following: same as 2 and following
530 cement layer - t530 thickness - LP line of pores

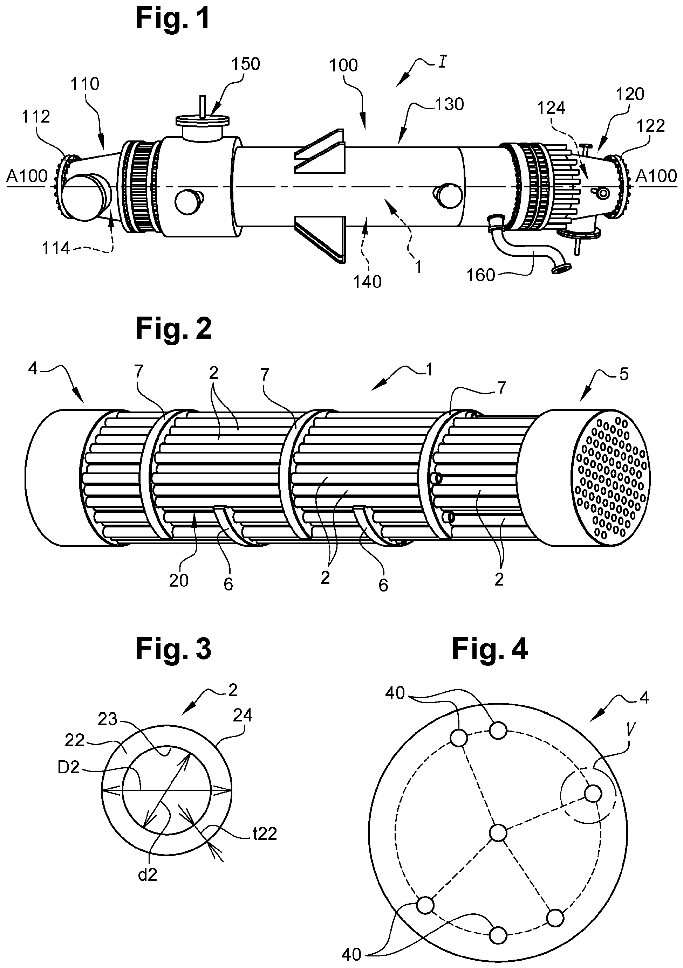

Figure 1 illustrates a heat exchanger, referenced I as a whole. This exchanger firstly comprises a shell 100, the main longitudinal axis of which is noted A100. This shell defines a cover 110 at one first end, a bottom 120 at the opposite end, as well as a main cylindrical region 130. As will be described in further detail, region 130 defines a so-called heat exchange volume 140.

Said shell 100 accommodates a heat exchange graphite assembly according to the invention, which is referenced 1 as a whole. As shown on figure 2, this assembly essentially comprises a plurality of tubes 2, two end tube sheets 4 and 5, as well as baffles 6 and 7. The structure and the manufacturing method of this assembly will be detailed thereafter.

Cover 110 is equipped with a duct 112 intended for the inlet of a first or process fluid into the tubes 2 of the assembly 1. This inlet is connected with a source of this fluid, which is situated upstream and is not illustrated. Said duct 112 leads, via an admission chamber 114, to the heat exchange volume 140.

Moreover, the bottom 120 is equipped with a further duct 122 for the outlet of the first fluid outside the longitudinal tubes 2. This duct is provided downstream heat exchange volume 140, via a discharge chamber 124. In a way known as such, duct 122 is connected with a recovery tank, which is not illustrated.

In a way known as such shell 100 is further equipped with respective inlet 150 and outlet 160 pipes of a second or service fluid, respectively connected with a source and a recovery tank. Said second fluid is intended to be placed in heat exchange with the first fluid, in the aforementioned heat exchange volume 140.

Figure 3 illustrates one 2 of the tubes, which are mutually identical and form a bundle 20. Tube 2, which has a circular cross-section, defines an annular wall 22 having an inner face 23 and an outer face 24. The characteristic dimensions of this tube will be detailed at the end of the present description.

Tube 2, which is made of graphite, is produced by any appropriate process. The latter typically comprises at least part of known steps amongst mixing, extrusion, carbonization and high temperature treatment. The graphite material of this tube, which is similar to prior art, has a thermal conductivity which is advantageously of at least 20 W.m.K, typically between 50 W.m.K and 80 W.m.K.

Moreover this graphite material has a so-called first value of porosity, which is rather high. As a consequence this graphite is permeable to liquids. This brings about a need for impregnate this graphite, so that it might be adapted to its intended final use.

Figure 4 illustrates one 4 of the tube sheets, bearing in mind that the other one 5 is identical. This tube sheet 4 is made of substantially the same material, as tubes 2. In addition the manufacturing process of this sheet, as well as its properties, are similar to those of each tube.

Tube sheet 4, which has a cylindrical shape, is provided with means adapted to ensure its attachment and its sealing on the inner wall of the shell 100. These means, which are not shown, are of any appropriate type known by those skilled in the art.

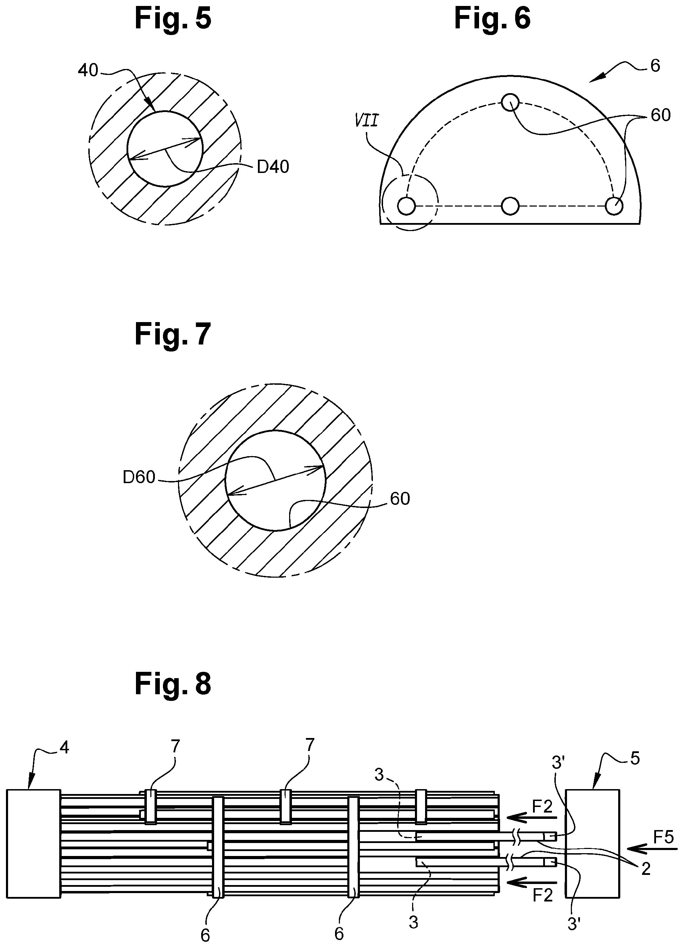

Tube sheet 4 is provided with a plurality of through holes 40, which extend perpendicular to its main plane. These holes are manufactured by any appropriate way, in particular by machining. With reference to figure 5, let us note the diameter D40 of each hole 40: in a typical way, the difference (D40-D2) is between 0.01 mm (millimeter) and 1 mm. As it will be detailed hereafter, the value of this difference is of importance since it determines the thickness of the bonding film between tube and tube sheet.

Figure 6 illustrates one of the baffles, which is referenced as 6, bearing in mind that the structure of the other baffles 7 is identical. The material, the manufacturing process and the properties of this baffle, which are similar to those of the tube sheets 4 and 5, are also known as such.

Baffle 6 is provided with a plurality of through openings 60, which extend perpendicular to its main plane. These openings are manufactured by any appropriate way, in particular by machining. With reference to figure 7, let us note the diameter D60 of each opening 60: contrary to D40, the value of D60 is not of much importance. In a way known as such, the difference (D60-D2) shall be sufficient to allow a convenient assembling between tubes and baffles. Moreover this difference shall be not too high, so as to avoid untimely bypass of fluid between the tubes and the walls of the holes provided in the baffle.

An essential feature of the invention provides the creation of a preform 201, which is constituted by the same mechanical elements as those of the final heat exchange assembly 1. According to an advantageous embodiment, this preform is directly mounted in a not shown vessel adapted to receive an implementation product. First one tube sheet 4 as well as the baffles 6 and 7 are immobilized with respect to the walls of this vessel, via any appropriate mechanical means.

Each tube is then moved along its main direction, according to arrow F2 on figure 8. First end 3 of each tube is successively inserted into the openings of the different baffles, as well as the holes of the tube sheet 4. Afterwards the other tube sheet 5 is moved along arrow F5, so that its holes cooperate with the opposite end 3' of the tubes. This operation is substantially similar to the one part of prior art manufacturing of Polytube^{®}, with the difference that it is carried out with not impregnated graphite.

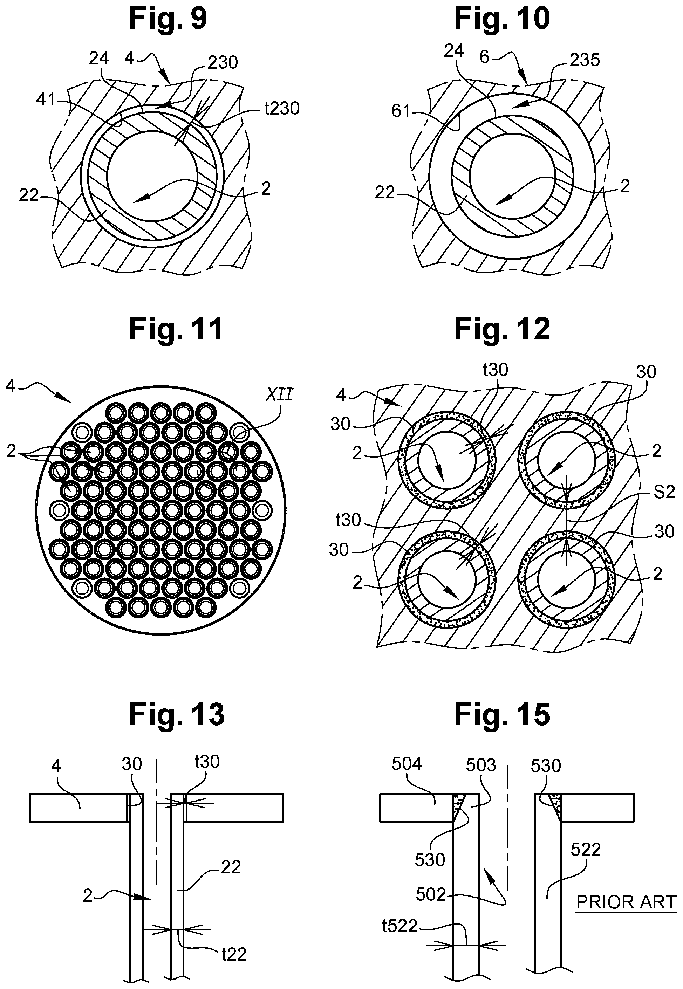

At the end of this operation, as shown on figure 9, outer face 24 of each tube 2 forms a clearance 230 with the facing wall 41 surrounding the hole 40 of the tube sheet. The transverse dimension or thickness t230 of this clearance is substantially the half of above defined difference (D40-D2), namely between 0.005 mm and 0.5 mm, in particular between 0.01 mm and 0.1 mm. On this figure 9, clearance 230 is represented as perfectly annular. In practice, tube 2 and hole 40 may be not strictly concentric. Therefore above value of t230 is an average value over the periphery of said clearance.

In an analogous way, as shown on figure 10, outer face 24 of each tube 2 forms an intercalary space 235 with the facing wall surrounding the opening of the baffle. It is to be noted that figures 9 in 10 are not at the real scale for sake of clarity.

The tubes, the tube sheets and the baffles define a preform 201 in which they are positioned the one with respect to the other, substantially in the final position they are intended to occupy. Moreover, at this stage, these elements have not been impregnated yet so that they are still porous.

It is to be noted that tubes, tube sheets and the baffles are not yet firmly attached the one with respect to the other. However the clearances 230 between tubes and tube sheets are small, and the baffles tend to ensure a stabilization function. Therefore the above elements are not likely to move the one with respect to the other, during the whole process.

Afterwards, the impregnation step of the method according to the invention is carried out. The impregnation product is chosen so as to fulfil two different functions. First this product shall impregnate the pores of the graphite material, in a way known as such. In addition this product shall fill the clearances 230, so as to tightly bond the walls of the tube with respect to the facing walls of the tube sheets.

By way of example, the impregnation product might be a phenolic resin, such as the one used in the manufacturing of prior art POLYTUBEO. As alternatives, those skilled in the art may choose other appropriate products, such as other types of resins.

In a practical way, this impregnation step may for example be carried out as follows. Impregnation product is first admitted in the vessel, wherein preform 201 is mounted. In an advantageous way, this admission is carried out from the bottom of the vessel, so as to reduce swirl phenomenon. This makes it possible to avoid any significant displacement of the mechanical elements, which are part of the preform.

Once impregnation product covers the entire preform, a contacting step between preform and impregnation product is carried out. In an advantageous way, the duration of this contacting step, also called contacting duration, is typically between 5 and 72h. Thereafter impregnation product is finally evacuated, advantageously from the bottom of the vessel.

In a further step, the impregnated preform is advantageously heated at a temperature of between 50°C and 250°C, during between 5 and 24h. This heating step, known as such, makes it possible to create a thermosetting of the resin and render the graphite impervious.

Once the above steps have been carried out, the impregnated product is in a so-called hardened or solidified state. Therefore this renders liquid tight both tubes 2 as well as tube sheets 4 and 5. In this so-called impregnated state, the constitutive elements of the preform 201 have now a second value of porosity, which is far inferior to the first value which has been above mentioned. Due to this far lower porosity, the elements of the final assembly are now adapted to their intended use.

This impregnation also leads to the creation of a continuous film 30, as shown on figures 12 and 13, which fills the above described clearance 230. This film has a thickness t30 corresponding to dimension t230 of the clearance, namely between 0.005 mm and 0.5 mm, in particular between 0.01 mm and 0.1 mm. This film 30 constitutes a continuous tight bond that makes it possible to firmly attach the tubes 2 with respect to each tube sheets 4 and 5. For the same reason as detailed above for clearance 230, though film 30 is represented as perfectly annular, it may have a slightly different shape. Under these conditions t30 is an average value over the periphery of said film.

On the other hand, the hardened impregnated product fills at least partly the intercalary space 235. This leads to the creation of a not shown intercalary layer, between tubes and baffles. Contrary to film 30, this layer does not need to be continuous and to create a tight bond between the tubes and the baffles.

The above steps, in particular creating tight bond between tubes and tubes sheet, lead to the formation of the final assembly 1. The latter is then accommodated in the shell 100, according to any appropriate manner. This stage is substantially the same as the one applied in the manufacturing of prior art exchange POLYTUBEO, as above described. This is advantageous, in terms of manufacturing convenience for the operators.

The invention makes it possible to achieve the above explained aims. In this respect, it shall be underlined that the applicant has identified the core issue, which brings about some drawbacks in the prior art exchangers. In particular the applicant has highlighted that the use of a cement leads to several technical problems.

As a reminder, a cement can be defined as a mixture of solid particles and of a binder. Once in place between the facing walls of the tubes and the tube sheets, this mixture is heat treated to cause irreversible hardening of the binder and ensure the mutual attachment between tubes and tube sheets.

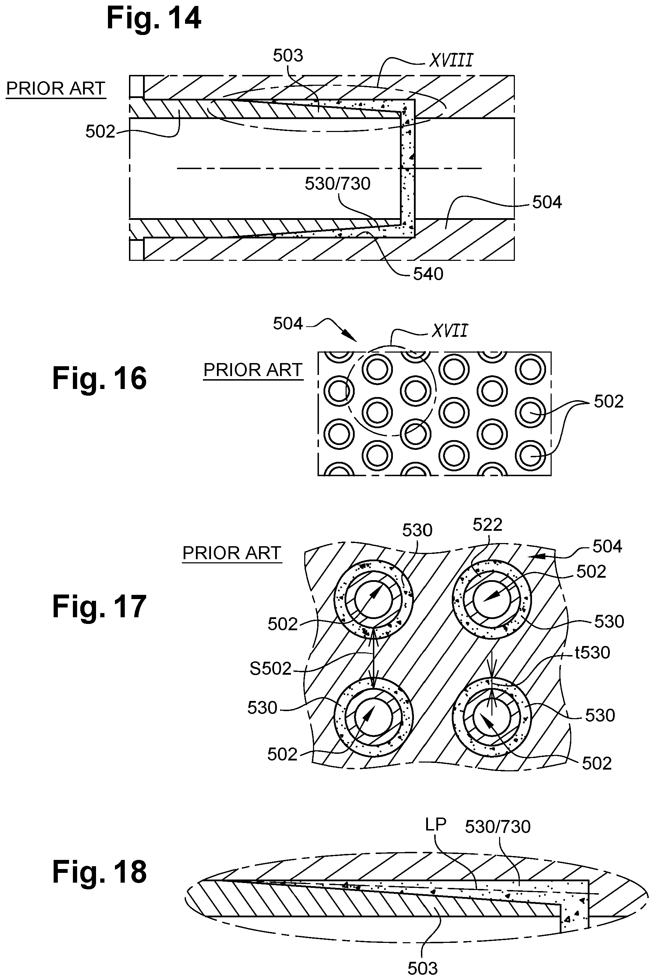

So as to illustrate the drawbacks due to the use of a cement, let us refer now to figures 14 to 17 illustrating an exchanger II according to prior art. On these figures, mechanical elements which are analogous to those of exchanger I are given the same references, added by number 500.

As shown at great scale on figure 14, in prior art each tube 502 has a tapered end 503. The latter defines a free space 730, with facing walls surrounding holes 540 of tube sheet 504. Once this space 730 has been filled with a cement, the latter forms a layer referenced 530 on this figure 14.

This layer 530 is provided with a substantially continuous line of pores, which extends at the interface between cement and graphite materials. This line, which is referenced LP, is schematically illustrated on figure 18 which shows at a greater scale the detail XVIII of figure 14. The Applicant has acknowledged that these pores constitute a weak point with respect to the tightness of the assembly. Indeed this line of pores forms a so-called preferred path for a potential chemical attack by process fluid.

On the contrary, an essential feature of the invention foresees to avoid the cement previously used to attach tube and tube sheets. According to the invention, cement is replaced by above continuous bonding film 30, made of the same product also permitting impregnation of porous graphite.

In other words this product ensures, apart from its usual function of impregnation, a further function of bonding. On the contrary, it shall be underlined that a cement is not adapted to fulfil these two above-mentioned functions at the same time.

Under these conditions, the thickness t30 of this film 30 (see figure 12) is advantageously far inferior to that t530 of a cement layer 530 (see figure 17). Moreover each tube end, such as the one referenced 3 on figure 13, is straight which is more convenient for what concerns manufacturing process of these tubes.

In addition, avoiding the use of a cement makes it possible to save many costs in the manufacturing of the assembly according to the invention. As a summary, in prior art, tubes, tube sheets and baffles are first submitted to separate impregnation steps and then undergo several tedious mechanical operations. On the other hand, the invention foresees a preliminary positioning of these non-impregnated elements, and thereafter one single impregnation step. By way of example, it can be assumed that the invention permits 50% less workmanship, as well as 80% less process operations.

Suppression of cement also allows a substantial modification in the global arrangement of the tubes. Indeed, the manual assembling process of prior art imposes a minimal spacing, noted S502 on figure 17, between two adjacent tubes 502. This spacing, typically of at least 7 mm, is compulsory to allow access to the operator hand, as well as for leaving the free space 730 of figure 14.

On the contrary, the invention makes it possible to arrange adjacent tubes much closer than in prior art, since operators do not need to access between these adjacent tubes. Under these conditions, as noted on figure 12, the spacing S2 between outer walls 24 of adjacent tubes may be far inferior to the prior art one S502. By way of example, the value of this spacing S2 is between 0.5 mm and 6 mm, advantageously between 1 mm and 3 mm.

Moreover the prior assembling process imposes to use tubes, with a rather thick wall 522. This is compulsory, in particular to allow a tough handling by the operators. The wall thickness of each tube 502, referenced t522 on figure 15, is typically superior to 5 mm. This figure 15 also shows layer 530, in a schematic way.

The assembly of the present invention may comprise tubes of prior art, with the rather thick wall as described in the preceding paragraph. However, in a preferred manner, the invention permits using much thinner tubes, with a far inferior wall thickness. By way of example, said thickness t22 of wall 22 is between 1 mm and 7 mm, advantageously between 2 mm and 5 mm. In addition, with reference to figure 3, inner diameter d2 of the tube is advantageously between 5 and 40 mm and outer diameter D2 of the tube is advantageously between 7 and 55 mm.

Due to this preferred variant of the invention, more tubes are therefore likely to be mounted on a same size tube sheets. Thus, taking also into account the inferior thickness of the tube, the invention significantly increases the thermal performances of the exchanger. By way of example it can be assumed that an exchanger of the invention, with thinner tubes and closer adjacent tubes with respect to prior art, has a heat transfer area which is twice as high as prior art exchangers. Thermal conductivity may also be increased, by a factor of 2.

The present invention brings also some advantages, concerning the correct implementation of the exchanger. Thus, in prior art, manual mounting implies some defects, amongst which one is commonly called "over cementing". In this occurrence, cement is mistakenly introduced inside some tubes, wherein it creates so-called scales which deposit against inner walls of the tubes. With time, some of these scales are likely to break away from the tubes, due to the liquid flow. These cement pieces may then move along the whole exchanger, where they can cause obstructions. According to the invention, which does not use cement any more, this untimely phenomenon is avoided.

The invention further permits a compact design of both the graphite assembly and the global exchanger. Under these conditions, less civil engineering is required, less carbon dioxide linked to transportation, as well as less steel for the shell manufacturing.

The invention makes it also possible to reduce the transportation risks. In this respect, the different mechanical elements can be sent in the form of a space saving kit, from the main manufacturing factory. These elements are then likely to be mutually assembled, in the local subsidiaries.

## Claims

1. A manufacturing method of a heat exchange graphite assembly (1), said assembly being intended to be part of a tube bundle heat exchanger (I), said assembly comprising
- a plurality of tubes (2) forming a bundle (20)
- two tube sheets (4, 5) provided at opposite ends of said tubes, each tube sheet comprising through holes (20) for the reception of said tubes
- at least one baffle (6, 7) provided at intermediate location of said tubes, each baffle comprising openings (60) for the passage of said tubes
said manufacturing method comprising
- providing said tubes, said tube sheets as well as said baffle(s) in a graphite material being in a so-called non-impregnated or porous state, namely with a first value of porosity
- positioning said tubes, said tube sheets as well as said baffle(s) in their porous state, substantially in the precise position they are intended to occupy, so as to create a functional clearance (230) between the facing walls of said tubes and said holes
- impregnating said tubes, said tube sheets as well as said baffle(s) with an impregnation product different from a cement,
so as to fill in the pores of said tubes, said tube sheets as well as said baffle (s), in order to confer to graphite material a second value of porosity, well inferior to said first value of porosity; and
so as to form, in said clearance, a bonding film (30) made of said impregnating product, in order to firmly attach the tubes with respect to the tube sheets.

2. A manufacturing method according to claim 1, **characterized in that** transverse dimension or thickness (t230) of said clearance (230) is between 0.005 mm and 0.5 mm, in particular between 0.01 mm and 0.1 mm.

3. A manufacturing method according to one of the preceding claims **characterized in that** no cement is inserted in said clearance.

4. A manufacturing method according to one of the preceding claims **characterized in that** impregnating said tubes, said tube sheets as well as said baffle(s) comprises
placing in a vessel said tubes, said tube sheets as well as said baffle(s),
filling said vessel with said impregnation product, in particular from the bottom of said vessel,
contacting said tubes, said tube sheets as well as said baffle(s) with said impregnation product and
emptying said impregnation product.

5. A manufacturing method according to one of the preceding claims **characterized in that** contacting duration, between said tubes, said tube sheets as well as said baffle(s) and said impregnation product, is between 5 hours and 72 hours.

6. A manufacturing method according to one of the preceding claims **characterized in that** it further comprises, after the impregnating step, a curing step wherein tubes, tube sheets as well as baffle(s) are heated at a temperature between 50 and 250°C, during a duration between 5 hours and 24 hours.

7. A manufacturing method according to one of the preceding claims, **characterized in that** the thickness (t30) of bonding film (30) is between 0.005 mm and 0.5 mm, in particular between 0.01 mm and 0.1 mm.

8. A manufacturing method according to one of the preceding claims, **characterized in that** the thickness (t22) of tube wall (22) is between 1 and 7 mm, advantageously between 2 mm and 5 mm.

9. A manufacturing method according to one of the preceding claims, **characterized in that** the spacing (S2) between the outer faces of two adjacent tubes is between 0.5 mm and 6 mm, advantageously between 1 mm and 3 mm.

10. A heat exchange graphite assembly (1), manufactured by a method according to any preceding claim, said assembly being intended to be part of a tube bundle heat exchanger (I), said assembly comprising
- a plurality of tubes (2) forming a bundle (20)
- two tube sheets (4, 5) provided at opposite ends of said tubes, each tube sheet comprising through holes (20) for the reception of opposite ends (3, 3') of said tubes
- at least one baffle (6, 7) provided at intermediate location of said tubes, each baffle comprising openings (60) for the passage of said tubes
- said tubes, said tube sheets as well as said baffle(s) being made of a graphite material,
said graphite material being at least partly filled with an impregnation product, different from a cement
said graphite assembly (1) being **characterized in that**, at each opposite end (3, 3') of each tube, a continuous bonding film (30) made of said impregnation product is interposed between the facing walls of said tube (2) and said hole (20), so as to attach a respective end of each tube to a respective tube sheet.

11. A heat exchange graphite assembly according to preceding claim, **characterized in that** the thickness (t30) of bonding film (30) is between 0.005 mm and 0.5 mm, in particular between 0.01 mm and 0.1 mm.

12. A heat exchange graphite assembly according to claim 10 or 11, **characterized in that** the thickness (t22) of tube wall (22) is between 1 mm and 7 mm, advantageously between 2 mm and 5 mm.

13. A heat exchange graphite assembly according to any of claims 10 to 12, **characterized in that** the spacing (S2) between the outer faces of two adjacent tubes is between 0.5 mm and 6 mm, advantageously between 1 mm and 3 mm.

14. A heat exchange graphite assembly according to any of claims 10 to 13, **characterized in that** said tube has two straight ends (3, 3').

15. A tube bundle heat exchanger comprising
- a heat exchange graphite assembly (1), according to any of claims 10 to 14,
- a shell (100) surrounding said assembly, the tube sheets (4, 5) of said assembly being attached to the inner wall of said shell, said shell comprising
- first inlet means (110, 112, 114) for the inlet of a first fluid into the tubes (2) of the assembly (1)
- first outlet means (120, 122, 124) for the outlet of said first fluid out of the tubes (2) of the assembly (1)
- second inlet means (150) for the inlet of a second fluid into a heat exchange volume (140) formed between the facing walls of said tubes and said shell
- second outlet means (150) for the outlet of said second fluid out of said heat exchange volume (140).

## Patentansprüche

1. Ein Herstellungsverfahren für eine Graphit-Wärmetauscherbaugruppe (1), wobei besagte Baugruppe als Teil eines Rohrbündel-Wärmetauschers (I) vorgesehen ist und besagte Baugruppe Folgendes umfasst:
- eine Vielzahl von Rohren (2), die ein Bündel (20) bilden,
- zwei Rohrböden (4, 5) an gegenüberliegenden Enden der besagten Rohre, wobei jeder Rohrboden Durchgangslöcher (20) zur Aufnahme der besagten Rohre aufweist,
- mindestens eine Leitplatte (6, 7) in einer Zwischenposition in Bezug auf die Rohre, wobei jedes Leitblech Öffnungen (60) für den Durchgang der besagten Rohre aufweist,
wobei das Herstellungsverfahren umfasst
- die Bereitstellung der besagten Rohre, der besagten Rohrböden sowie der besagten Leitplatten aus einem Graphitmaterial in einem sogenannten nicht imprägnierten oder porösen Zustand, nämlich mit einem ersten Wert der Porosität,
- die Positionierung der besagten Rohre, der besagten Rohrböden und der besagten Leitplatten im porösen Zustand, im Wesentlichen an der exakten Position, die sie einnehmen sollen, um einen funktionalen Spalt (230) zwischen den gegenüberliegenden Wänden der besagten Rohre und der besagten Öffnungen zu schaffen,
- Imprägnieren der besagten Rohre, der besagten Rohrböden sowie der besagten Leitplatten mit einem Imprägniermittel, das kein Zement ist,
um die Poren der besagten Rohre, der besagten Rohrböden sowie der besagten Leitplatten zu füllen, um dem Graphitmaterial einen zweiten Porositätswert zu verleihen, der deutlich unter dem ersten Porositätswert liegt; und
um in diesem Spalt einen Haftfilm (30) aus dem Imprägniermittel zu bilden, der die Rohre fest mit den Rohrböden verbindet.

2. Ein Herstellungsverfahren nach Anspruch 1, **dadurch gekennzeichnet, dass** die Querabmessung oder Dicke (t230) des Spalts (230) zwischen 0,005 mm und 0,5 mm, insbesondere zwischen 0,01 mm und 0,1 mm, liegt.

3. Ein Herstellungsverfahren nach einem der vorhergehenden Ansprüche **dadurch gekennzeichnet, dass** kein Zement in den Spalt eingebracht wird.

4. Ein Herstellungsverfahren nach einem der vorhergehenden Ansprüche, **dadurch gekennzeichnet, dass** das Imprägnieren der besagten Rohre, der besagten Rohrböden sowie der besagten Leitplatte(n) umfasst:
das Einbringen der besagten Rohre, der besagten Rohrböden sowie der besagten Leitplatten in ein Gefäß,
das Befüllen des Gefäßes mit dem Imprägniermittel, insbesondere von unten,
die Kontaktierung der besagten Rohre, der besagten Rohrböden sowie der besagten Leitplatten mit dem besagten Imprägniermittel, und
das Entleeren des besagten Imprägniermittels.

5. Ein Herstellungsverfahren nach einem der vorhergehenden Ansprüche, **dadurch gekennzeichnet, dass** die Kontaktzeit zwischen den besagten Rohren, den besagten Rohrböden sowie den besagten Leitplatten und dem Imprägniermittel zwischen 5 Stunden und 72 Stunden liegt.

6. Ein Herstellungsverfahren nach einem der vorhergehenden Ansprüche, **dadurch gekennzeichnet, dass** es nach dem Imprägnierschritt einen Aushärtungsschritt umfasst, bei dem Rohre, Rohrböden sowie Leitplatten bei einer Temperatur zwischen 50 und 250 °C für eine Dauer zwischen 5 Stunden und 24 Stunden erhitzt werden.

7. Ein Herstellungsverfahren nach einem der vorhergehenden Ansprüche, **dadurch gekennzeichnet, dass** die Dicke (t30) des Klebefilms (30) zwischen 0,005 mm und 0,5 mm, insbesondere zwischen 0,01 mm und 0,1 mm, liegt.

8. Ein Herstellungsverfahren nach einem der vorhergehenden Ansprüche, **dadurch gekennzeichnet, dass** die Wandstärke (t22) des Rohres (22) zwischen 1 und 7 mm, vorzugsweise zwischen 2 mm und 5 mm, liegt.

9. Ein Herstellungsverfahren nach einem der vorhergehenden Ansprüche, **dadurch gekennzeichnet, dass** der Abstand (S2) zwischen den Außenflächen zweier benachbarter Rohre zwischen 0,5 mm und 6 mm, vorzugsweise zwischen 1 mm und 3 mm, liegt.

10. Eine Graphit-Wärmetauscheranordnung (1), hergestellt nach einem Verfahren gemäß einem vorhergehenden Anspruch, wobei diese Anordnung als Teil eines Rohrbündelwärmetauschers (I) vorgesehen ist, wobei diese Anordnung Folgendes umfasst:
- eine Vielzahl von Rohren (2), die ein Bündel (20) bilden,
- zwei Rohrböden (4, 5) an den gegenüberliegenden Enden der Rohre, wobei jeder Rohrboden Durchgangslöcher (20) zur Aufnahme der gegenüberliegenden Enden (3, 3') der Rohre aufweist,
- mindestens eine Leitplatte (6, 7) in einer Zwischenposition in Bezug auf die Rohre, wobei jede Leitplatte Öffnungen (60) für den Durchgang der Rohre aufweist,
- wobei die besagten Rohre, die besagten Rohrböden sowie die besagten Leitplatten aus einem Graphitmaterial bestehen,
wobein besagtes Graphitmaterial zumindest teilweise mit einem Imprägniermittel gefüllt ist, das kein Zement ist,
wobei die Graphitanordnung (1) ist **dadurch gekennzeichnet, dass** an jedem gegenüberliegenden Ende (3, 3') jedes Rohres ein durchgehender Bindemittelfilm (30) aus dem besagten Imprägniermittel zwischen den gegenüberliegenden Wänden des Rohres (2) und der Öffnung (20) angeordnet ist, um ein jeweiliges Ende jedes Rohres mit einem jeweiligen Rohrboden zu verbinden.

11. Eine Wärmeaustausch-Graphitanordnung nach dem vorhergehenden Anspruch, **dadurch gekennzeichnet, dass** die Dicke (t30) des Haftfilms (30) zwischen 0,005 mm und 0,5 mm, insbesondere zwischen 0,01 mm und 0,1 mm, liegt.

12. Eine Wärmeaustauscher-Graphitanordnung nach Anspruch 10 oder 11, **dadurch gekennzeichnet, dass** die Dicke (t22) der Rohrwand (22) zwischen 1 mm und 7 mm, vorzugsweise zwischen 2 mm und 5 mm, liegt.

13. Eine Wärmeaustauscher-Graphitanordnung nach einem der Ansprüche 10 bis 12, **dadurch gekennzeichnet, dass** der Abstand (S2) zwischen den Außenflächen zweier benachbarter Rohre zwischen 0,5 mm und 6 mm, vorzugsweise zwischen 1 mm und 3 mm, liegt.

14. Eine Wärmeaustauscher-Graphitanordnung nach einem der Ansprüche 10 bis 13, **dadurch gekennzeichnet, dass** das Rohr zwei gerade Enden (3, 3') aufweist.

15. Ein Rohrbündelwärmetauscher, umfassend
- eine Graphit-Wärmetauscheranordnung (1) nach einem der Ansprüche 10 bis 14,
- ein Gehäuse (100), das besagte Anordnung umschließt, wobei die Rohrböden (4, 5) der besagten Anordnung an der Innenwand des besagten Gehäuses befestigt sind, wobei das besagte Gehäuse Folgendes umfasst:
- erste Einlassmittel (110, 112, 114) für den Einlass eines ersten Fluids in die Rohre (2) der Anordnung (1),
- erste Auslassmittel (120, 122, 124) zum Austritt des ersten Fluids aus den Rohren (2) der Anordnung (1),
- zweite Einlassmittel (150) zum Einleiten eines zweiten Fluids in ein Wärmetauschervolumen (140), das zwischen den gegenüberliegenden Wänden der besagten Rohre und dem besagten Gehäuse gebildet wird,
- zweite Auslassmittel (150) für den Austritt des zweiten Fluids aus dem besagten Wärmetauschervolumen (140).

## Revendications

1. Procédé de fabrication d'un ensemble en graphite pour échange de chaleur (1), ledit ensemble étant destiné à faire partie d'un d'échangeur de chaleur (I) à faisceau tubulaire, ledit ensemble comprenant
- une pluralité de tubes (2) formant un faisceau (20),
- deux plaques tubulaires (4, 5) disposées aux extrémités opposées desdits tubes, chaque plaque tubulaire comportant des trous traversants (20) destinés à recevoir lesdits tubes,
- au moins une plaque support (6, 7) placée à une position intermédiaire par rapport auxdits tubes, chaque plaque support comportant des ouvertures (60) pour le passage desdits tubes,
ledit procédé de fabrication comprenant
- fournir lesdits tubes, lesdites plaques tubulaires ainsi que lesdits plaques support en un matériau graphite se trouvant dans un état dit non imprégné ou poreux, à savoir avec une première valeur de porosité,
- positionner lesdits tubes, lesdites plaques tubulaires ainsi que ladite / lesdites plaque(s) support dans leur état poreux, sensiblement à l'endroit précis où elles sont destinées à se trouver, de manière à créer un jeu fonctionnel (230) entre les parois opposées desdits tubes et lesdits trous,
- imprégner lesdits tubes, lesdites plaques tubulaires ainsi que lesdites plaques support avec un produit d'imprégnation qui n'est pas un ciment,
afin de remplir les pores desdits tubes, desdites plaques tubulaires ainsi que desdites plaques support, afin de conférer au matériau graphite une seconde valeur de porosité, nettement inférieure à ladite première valeur de porosité ; et
afin de former, dans ledit espace, un film de liaison (30) constitué dudit produit d'imprégnation, afin de fixer fermement les tubes par rapport aux plaques tubulaires.

2. Procédé de fabrication selon la revendication 1, **caractérisé en ce que** la dimension transversale ou l'épaisseur (t230) dudit jeu fonctionnel (230) est comprise entre 0,005 mm et 0,5 mm, en particulier entre 0,01 mm et 0,1 mm.

3. Procédé de fabrication selon l'une des revendications précédentes, **caractérisé en ce qu'**aucun ciment n'est inséré dans ledit espace.

4. Procédé de fabrication selon l'une des revendications précédentes, **caractérisé en ce que** l'imprégnation desdits tubes, desdites plaques tubulaires ainsi que desdites plaques support comprend :
placer dans un récipient lesdits tubes, lesdites plaques tubulaires ainsi que ladite / lesdites plaque(s) support,
remplir ledit récipient avec ledit produit d'imprégnation, notamment par le fond dudit récipient,
contacter lesdits tubes, lesdites plaques tubulaires ainsi que ladite / ledites plaque(s) support avec ledit produit d'imprégnation et
vider ledit produit d'imprégnation.

5. Procédé de fabrication selon l'une des revendications précédentes, **caractérisé en ce que** la durée de contact entre lesdits tubes, lesdites plaques tubulaires ainsi que ladite / ledites plaque(s) support et ledit produit d'imprégnation est comprise entre 5 heures et 72 heures.

6. Procédé de fabrication selon l'une des revendications précédentes, **caractérisé en ce qu'**il comprend en outre, après l'étape d'imprégnation, une étape de durcissement dans laquelle les tubes, les plaques tubulaires ainsi que ladite / ledites plaque(s) support sont chauffés à une température comprise entre 50 et 250 °C, pendant une durée comprise entre 5 heures et 24 heures.

7. Procédé de fabrication selon l'une des revendications précédentes, **caractérisé en ce que** l'épaisseur (t30) du film de liaison (30) est comprise entre 0,005 mm et 0,5 mm, et en particulier entre 0,01 mm et 0,1 mm.

8. Procédé de fabrication selon l'une des revendications précédentes, **caractérisé en ce que** l'épaisseur (t22) de la paroi du tube (22) est comprise entre 1 et 7 mm, avantageusement entre 2 mm et 5 mm.

9. Procédé de fabrication selon l'une des revendications précédentes, **caractérisé en ce que** l'espacement (S2) entre les faces extérieures de deux tubes adjacents est compris entre 0,5 mm et 6 mm, avantageusement entre 1 mm et 3 mm.

10. Un ensemble d'échange thermique en graphite (1), fabriqué selon un procédé conforme à l'une quelconque des revendications précédentes, ledit ensemble étant destiné à faire partie d'un échangeur de chaleur à faisceau tubulaire (I), ledit ensemble comprenant
- une pluralité de tubes (2) formant un faisceau (20),
- deux plaques tubulaires (4, 5) disposées aux extrémités opposées desdits tubes, chaque plaque tubulaire comportant des trous traversants (20) destinés à recevoir les extrémités opposées (3, 3') desdits tubes,
- au moins une plaque support (6, 7) placée à une position intermédiaire par rapport auxdits tubes, chaque plaque support comportant des ouvertures (60) pour le passage desdits tubes
- lesdits tubes, lesdites plaques tubulaires ainsi que ladite / ledites plaque(s) support étant fabriqués en matériau graphite,
ledit matériau en graphite étant au moins partiellement rempli d'un produit d'imprégnation, qui n'est pas un ciment, ledit assemblage en graphite (1) étant **caractérisé en ce que**, à chaque extrémité opposée (3, 3') de chaque tube, un film de liaison continu (30) constitué dudit produit d'imprégnation est interposé entre les parois opposées dudit tube (2) et ledit trou (20), de manière à fixer une extrémité respective de chaque tube à une plaque tubulaire respective.

11. Un ensemble en graphite d'échange thermique selon la revendication précédente, **caractérisé en ce que** l'épaisseur (t30) du film de liaison (30) est comprise entre 0,005 mm et 0,5 mm, en particulier entre 0,01 mm et 0,1 mm.

12. Un ensemble d'échange thermique en graphite selon la revendication 10 ou 11, **caractérisé en ce que** l'épaisseur (t22) de la paroi du tube (22) est comprise entre 1 mm et 7 mm, avantageusement entre 2 mm et 5 mm.

13. Un ensemble d'échange thermique en graphite selon l'une quelconque des revendications 10 à 12, **caractérisé en ce que** l'espacement (S2) entre les faces extérieures de deux tubes adjacents est compris entre 0,5 mm et 6 mm, avantageusement entre 1 mm et 3 mm.

14. Un ensemble d'échange thermique en graphite selon l'une quelconque des revendications 10 à 13, **caractérisé en ce que** ledit tube a deux extrémités droites (3, 3').

15. Un échangeur de chaleur à faisceau tubulaire comprenant
- un ensemble d'échange thermique en graphite (1), selon l'une quelconque des revendications 10 à 14,
- une enveloppe (100) entourant ledit ensemble, les plaques tubulaires (4, 5) dudit ensemble étant fixées à la paroi intérieure de ladite enveloppe, ladite enveloppe comprenant
- des premiers moyens d'entrée (110, 112, 114) pour l'entrée d'un premier fluide dans les tubes (2) de l'ensemble (1),
- des premiers moyens de sortie (120, 122, 124) pour la sortie dudit premier fluide hors des tubes (2) de l'ensemble (1),
- un second orifice d'entrée (150) destiné à l'introduction d'un second fluide dans un volume d'échange thermique (140) formé entre les parois opposées desdits tubes et de ladite enveloppe,
- des deuxième moyens de sortie (150) pour la sortie dudit deuxième fluide hors dudit volume d'échange thermique (140).
